# EUROPEAN PATENT APPLICATION

(11) **EP 4 571 795 A1**
(43) Date of publication of application: **18.06.2025**
(21) Application number: 23852355.9
(22) Date of filing: 25.07.2023
(51) Int. Cl.: H01B 17/56, B32B 27/12, B32B 27/34, B32B 27/36, H02K 3/30

(54) **INSULATING SHEET AND MOTOR**

(30) Priority: 08.08.2022 JP 2022126162
(71) Applicant: Nitto Shinko Corporation, Sakai-shi, Fukui 910-0381 (JP)
(72) Inventor: FUJIKI, Jun, Sakai-shi, Fukui 910-0381 (JP); YAMAGUCHI, Takeshi, Sakai-shi, Fukui 910-0381 (JP); TOKUNAGA, Risako, Sakai-shi, Fukui 910-0381 (JP)
(74) Representative: Stolmár & Partner Patentanwälte PartG mbB
(86) International application number: PCT/JP2023/027095
(87) International publication number: WO 2024/034379

(57) **Abstract**

Provided is an insulating sheet including: two outer layers disposed to be opposed to each other; two adhesive layers disposed to be opposed to each other between the two outer layers; and a substrate layer disposed between the two adhesive layers, in which each of the two outer layers is aromatic polyamide paper, the substrate layer is a polyethylene terephthalate resin film, and the polyethylene terephthalate resin film includes an oligomer component in a content of less than 0.8 mass %.

## Description

### CROSS-REFERENCE TO RELATED APPLICATION

This application claims priority to Japanese Patent Application No. 2022-126162, the disclosure of which is incorporated herein by reference in its entirety.

### FIELD

The present invention relates to an insulating sheet as, for example, a component of a motor, and a motor including the insulating sheet.

### BACKGROUND

Conventionally known is an insulating sheet including: a substrate layer; two outer layers disposed to be opposed respectively to one surface and an other surface of the substrate layer; and two adhesive layers respectively disposed between one of the outer layers and the base material and between the other one of the outer layers and the substrate layer.

Known as the insulating sheet of this type is, for example, a motor insulating sheet for use in a state of being immersed in a cutting oil. As the motor insulating sheet of this type, known is an insulating sheet including: the substrate layer and the two outer layers each made of a polyethylene naphthalate resin film; and the adhesive layers disposed respectively between the substrate layer and one of the two outer layers and between the substrate layer and the other one of the two outer layers, thereby being formed of five layers laminated on each other (for example, Patent Literature 1).

The insulating sheet described in Patent Literature 1 configured as above has relatively high tracking resistance.

### CITATION LIST

### Patent Literature

Patent Literature 1: JP 2016-165806 A

### SUMMARY

### Technical Problem

However, the insulating sheet described in Patent Literature 1 does not necessarily have sufficient heat resistance. Therefore, there is a demand for an insulating sheet having relatively high tracking resistance and having sufficient heat resistance.

In view of the above problems, demands, and the like, it is an object of the present invention to provide an insulating sheet having relatively high tracking resistance and sufficient heat resistance.

### Solution to Problem

In order to achieve the above object, an insulating sheet according to the present invention includes: two outer layers disposed to be opposed to each other; two adhesive layers disposed to be opposed to each other between the two outer layers; and a substrate layer disposed between the two adhesive layers, in which each of the two outer layers is aromatic polyamide paper, the substrate layer is a polyethylene terephthalate resin film, and the polyethylene terephthalate resin film includes an oligomer component in a content of less than 0.8 mass %.

A motor according to the present invention includes the above insulating sheet.

### BRIEF DESCRIPTION OF DRAWINGS

Fig. 1 is a schematic cross-sectional view of an insulating sheet according to an embodiment of the present invention obtained by cutting the insulating sheet in its thickness direction.
Fig. 2 is a perspective view of a stator of an oil-cooled drive motor.

### DESCRIPTION OF EMBODIMENTS

A description will be hereinafter given on an embodiment of an insulating sheet according to the present invention with reference to the drawings.

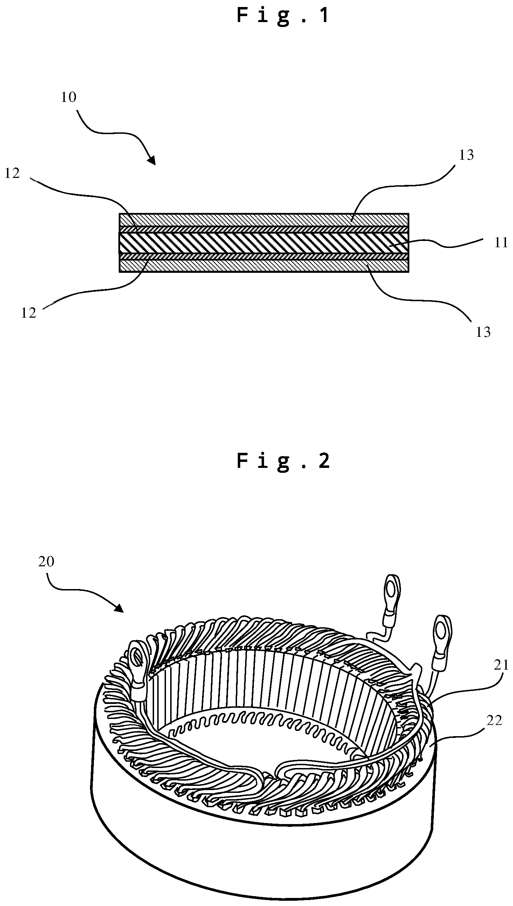

As shown in Fig. 1, an insulating sheet 10 of this embodiment includes: two outer layers 13 disposed to be opposed to each other; two adhesive layers 12 disposed to be opposed to each other between the two outer layers 13; and a substrate layer 11 disposed between the two adhesive layers 12. In other words, the insulating sheet 10 of this embodiment includes: one substrate layer 11; two adhesive layers 12 disposed to have the substrate layer 11 sandwiched therebetween in a thickness direction; and two outer layers 13 disposed to have the two adhesive layers 12 sandwiched therebetween in the thickness direction. In this embodiment, the substrate layer 11 and one of the adhesive layers 12 are in direct contact with each other, and the substrate layer 11 and the other one of the adhesive layers 12 are in direct contact with each other. The adhesive layer 12 and the outer layer 13 are in direct contact with each other on one surface of the substrate layer 11, and the adhesive layer 12 and the outer layer 13 are also in direct contact with each other on the other surface thereof. Each of the outer layers 13 can be an outermost layer of the insulating sheet 10.

The insulating sheet 10 has a thickness of, for example, 100 µm or more and 400 µm or less. The thickness of the insulating sheet 10 can be 120 µm or more, can be 170 µm or more. The thickness of the insulating sheet 10 can be 350 µm or less, can be 300 µm or less. The thickness of the insulating sheet 10 can be 190 µm or more and 270 µm or less. The thickness of the insulating sheet 10 is preferably 210 µm or more, more preferably 220 µm or more, in terms of obtaining a possibly higher tracking resistance.

The substrate layer 11 can have a thickness of, for example, 25 µm or more and 200 µm or less. The thickness of the substrate layer 11 is preferably 50 µm or more and 150 µm or less.

Each of the adhesive layers 12 can have a thickness of, for example, 1 µm or more and 80 µm or less. The thickness of the adhesive layer 12 is preferably 5 µm or more and 50 µm or less, more preferably 25 µm or more and 40 µm or less. It is preferable that a difference in thickness be small between one and the other of the two adhesive layers 12. For example, the one adhesive layer 12 can be 0.9 times or more and 1.1 times or less as thick as the other adhesive layer 12.

Each of the outer layers 13 can have a thickness of, for example, 20 µm or more and 100 µm or less. The thickness of each of the outer layers 13 is preferably 30 µm or more and 70 µm or less, more preferably 35 µm or more and 55 µm or less. It is preferable that a difference in thickness be small between one and the other of the two outer layers 13. For example, the one outer layer 13 can be 0.9 times or more and 1.1 times or less as thick as the other outer layer 13.

The thickness of each of the layers above refers to an average thickness. The thickness of each layer is determined by averaging the thicknesses of at least five portions randomly selected from the layer. The same applies below. The thickness of each layer can be measured by, for example, observing a lateral side or a cross section of the insulating sheet 10 with a digital microscope.

A ratio of the thickness of the substrate layer 11 to a total thickness of the insulating sheet 10 can be 0.20 or more, and is preferably 0.30 or more. The ratio of the thickness can be 0.50 or less.

A ratio of a total thickness of the adhesive layers 12 (the thickness of the two layers) to the total thickness of the insulating sheet 10 can be 0.10 or more, can be 0.15 or more, can be 0.19 or more, can be 0.20 or more. Such a ratio can be 0.40 or less, can be 0.30 or less.

A ratio of a total thickness of the outer layers 13 (the thickness of the two layers) to the total thickness of the insulating sheet 10 is preferably more than 0.20. Such a ratio can be 0.50 or less.

A ratio of a total thickness of one adhesive layer 12 and one outer layer 13 to the total thickness of the insulating sheet 10 can be 0.30 or more. Such a ratio can be 0.35 or less.

A ratio of a total thickness of the substrate layer 11 and the two outer layers 13 to the total thickness of the insulating sheet 10 can be 0.70 or more. Such a ratio can be less than 0.80, and is preferably less than 0.79.

A ratio of the total thickness of one adhesive layer 12 and one outer layer 13 (on one surface side of the substrate layer 11) to the thickness of the substrate layer 11 can be 0.50 or more. Such a ratio can be 1.50 or less.

A ratio of the thickness of each of the adhesive layers 12 to the thickness of each of the outer layers 13 can be 0.20 or more, can be 0.35 or more, can be 0.40 or more, can be 0.50 or more. Such a ratio can be 1.00 or less, can be 0.80 or less. The ratio of the thickness of each adhesive layer 12 to the thickness of each outer layer 13 is preferably 0.35 or more, more preferably more than 0.40. The insulating sheet 10 with such a ratio being 0.35 or more can have higher tracking resistance.

It is preferable that the above numerical range for the ratio of the thickness of each adhesive layer 12 to the thickness of each outer layer 13 be satisfied on at least one of the one surface side and the other surface side of the substrate layer 11. It is more preferable that the ratio of the thickness of each adhesive layer 12 to the thickness of each outer layer 13 fall within the above numerical range on each of both the one surface side and the other surface side of the substrate layer 11.

The substrate layer 11 is a polyethylene terephthalate resin film. A content of an oligomer component in the polyethylene terephthalate resin film of the substrate layer 11 is less than 0.8 mass % (including 0 mass %). Thus, the insulating sheet 10 of this embodiment can have better heat resistance than in the case where the polyethylene terephthalate resin film of the substrate layer 11 includes the oligomer component of 0.8 mass % or more.

The content of the oligomer component is measured as follows. Specifically, a film sample having a substantially square shape with a side of about 5 cm is washed with methanol, and then the film sample is dried in a hot air oven at 160 °C for an hour to measure an initial mass (M₁ [g]). Thereafter, the film sample is subjected to extraction treatment with boiling xylene (about 400 mL) using, for example, a Soxhlet extractor for 48 hours. Next, the mass (M₂ [g]) of the film sample after the extraction treatment is measured. A ratio of a mass reduction (M₁-M₂) to the initial mass (M₁) [(M₁-M₂) / M₁] is calculated to determine the content of the oligomer component. In order to accurately measure the mass reduction, the mass (M₂ [g]) of the film sample after the extraction treatment is measured after the xylene used in the extraction treatment is thoroughly removed. Preferably, the mass of the film sample after the extraction treatment (M₂ [g]) is measured after the film sample is washed with water after the extraction treatment, then the xylene attached to the film sample is gently wiped off, and further the film sample is dried in the hot air oven at 160 °C for 8 hours and allowed to cool in a desiccator.

Examples of the polyethylene terephthalate resin film include a film made of a polymer of a dicarboxylic acid such as terephthalic acid or 2,6-naphthalenedicarboxylic acid, and a diol such as ethylene glycol, 1,3-propanediol, 1,4-butanediol, or 1,4-cyclohexanedimethanol.

One individual type of the polyethylene terephthalate resin can form the substrate layer 11, or two or more types thereof can form the substrate layer 11. The substrate layer 11 can be a single layer as in this embodiment, or can be a laminate film in which a plurality of the polyethylene terephthalate resin films are layered on each other. When the substrate layer 11 is the laminate film, at least one layer of the laminate film can be a polyethylene terephthalate resin film including the oligomer component in a content of less than 0.8 mass %.

As the substrate layer 11, for example, a commercially available product such as "Lumirror X10S Type" (manufactured by TORAY INDUSTRIES, INC.) or "D MELINEX 238" (manufactured by DuPont) can be used.

The adhesive layer 12 of the insulating sheet 10 of this embodiment includes, for example, a polymer component. Examples of the polymer component include an acrylic polymer, an urethane polymer, and an epoxy resin.

The acrylic polymer is preferably a polymer formed by polymerizing at least an alkyl (meth)acrylate. The acrylic polymer can be, for example, a polymer of an alkyl (meth)acrylate, or a copolymer of an alkyl (meth)acrylate with another polymerizable monomer. The term "(meth)acrylate" herein includes both "acrylate" and "methacrylate".

Examples of the alkyl (meth)acrylate include methyl (meth)acrylate, ethyl (meth)acrylate, propyl (meth)acrylate [e.g., normal propyl (meth)acrylate, isopropyl (meth)acrylate], butyl (meth)acrylate [e.g., normal butyl (meth)acrylate, isobutyl (meth)acrylate, secondary butyl (meth)acrylate, tertiary butyl (meth)acrylate], 2-ethylhexyl (meth)acrylate, normal octyl (meth)acrylate, normal nonyl (meth)acrylate, and isononyl (meth)acrylate.

Examples of the other polymerizable monomer include ethylene, styrene, vinyl chloride, acrylic acid, butadiene, and acrylonitrile.

Examples of the copolymer include an ethylene-alkyl (meth)acrylate copolymer, an ethylene-alkyl (meth)acrylate-acrylic acid copolymer, a styrene-alkyl (meth)acrylate-acrylic acid copolymer, an alkyl (meth)acrylate-vinyl chloride copolymer, an alkyl (meth)acrylate-acrylic acid copolymer, an alkyl (meth)acrylate-vinyl chloride copolymer, a styrene-alkyl (meth)acrylate-butadiene copolymer, and an alkyl (meth)acrylate-acrylonitrile copolymer.

The adhesive layer 12 preferably includes a polymer compound in which polybutyl acrylate (PAB) is crosslinked with a polyisocyanate. The adhesive layer 12 more preferably includes a crosslinked reaction product of polybutyl acrylate (PAB), a terpene phenol, and a polyisocyanate. The adhesive layer 12 including such a crosslinked reaction product achieves tighter adhesiveness to the outer layer 13 (aromatic polyamide paper) when the insulating sheet 10 is immersed in a water-containing oil at a temperature as high as 120 to 180 °C. The amount of the terpene phenol added is preferably 1 mass part or more and 30 mass parts or less based on 100 mass parts of polybutyl acrylate (PAB). The above tighter adhesiveness can still be achieved even when alkylphenol is used in substitution for the terpene phenol. The amount of the alkylphenol added is also preferably 1 mass part or more and 30 mass parts or less based on 100 mass parts of polybutyl acrylate (PAB). The polybutyl acrylate (PAB) can have a carboxy group in part of its molecule.

The acrylic polymers can be individually used, or two or more of them can be used in combination.

The urethane polymer that can be included in the adhesive layer 12 can be, for example, an urethanization reaction product of a polyol component having a plurality of hydroxy groups in a molecule and a polyisocyanate component having a plurality of isocyanate groups in a molecule. The "urethane polymer" herein does not refer to a "polyurethane-urea resin", but is a polymer not substantially including urea bonds.

Examples of the polyol component include a conventionally known polyol component, examples of which include a polyester polyol, a polyether polyol, and a polycarbonate polyol.

Examples of the polyester polyol include polyethylene adipate diol, polybutylene adipate diol, polyhexamethylene adipate diol, polyneopentyl adipate diol, polyethylene/butylene adipate diol, polyneopentyl/hexyl adipate diol, poly-3-methylpentane adipate diol, polybutylene isophthalate diol, polycaprolactone diol, and poly-3-methylvalerolactone diol.

Examples of the polyether polyol include polyethylene glycol, polypropylene glycol, polytetramethylene glycol, and a random/block copolymer thereof.

Examples of the polycarbonate polyol include polytetramethylene carbonate diol, polypentamethylene carbonate diol, polyneopentyl carbonate diol, polyhexamethylene carbonate diol, poly(1,4-cyclohexanedimethylene carbonate) diol, and a random/block copolymer thereof.

Other examples of the polyol component include a dimer diol and a hydrogenated product thereof, a polybutadiene polyol and a hydrogenated product thereof, a polyisoprene polyol and a hydrogenated product thereof, an acrylic polyol, an epoxy polyol, a polyether ester polyol, a siloxane-modified polyol, α,ω-polymethyl methacrylate diol, and α,ω-polybutyl methacrylate diol.

Examples of the polyisocyanate component include a conventionally known polyisocyanate component.

Examples of the polyisocyanate component include: aromatic diisocyanates such as toluene-2,4-diisocyanate, toluene-2,6-diisocyanate, 4-methoxy-1,3-phenylene diisocyanate, 4-isopropyl-1,3-phenylene diisocyanate, 4-chloro-1,3-phenylene diisocyanate, 4-butoxy-1,3-phenylene diisocyanate, 2,4-diisocyanate diphenyl ether, 4,4'-methylenebis(phenylene isocyanate) (MDI), crude or polymeric MDI, durylene diisocyanate, xylylene diisocyanate (XDI), 1,5-naphthalene diisocyanate, benzidine diisocyanate, o-nitrobenzidine diisocyanate, and 4,4'-diisocyanate dibenzyl. Examples of the polyisocyanate component include aliphatic diisocyanates such as methylene diisocyanate and 1,4-tetramethylene diisocyanate. Examples of the polyisocyanate compound include alicyclic isocyanates such as 1,4-cyclohexylene diisocyanate, 4,4'-methylenebis (cyclohexyl isocyanate), 1,5-tetrahydronaphthalene diisocyanate, isophorone diisocyanate, and hydrogenated XDI. Further, examples of the polyisocyanate component include a polyurethane prepolymer obtained by causing these diisocyanates and a low molecular weight polyol to react with each other to have its terminal being isocyanate.

The urethane polymer can be produced by a conventionally known and general producing method. For example, the urethane polymer can be produced by subjecting the polyol component and the polyisocyanate component to a urethane reaction by a one-shot method or a multiple stage method. The one-shot method and the multiple stage method can be carried out at a temperature usually in a range of 20 °C or more and 150 °C or less, preferably 60 °C or more and 110 °C or less. To form the adhesive layer 12, used can be a commercially available product including a urethane polymer, such as "TYFORCE SA-30-L" manufactured by DIC Corporation.

Examples of the epoxy resin that can be included in the adhesive layer 12 include a phenol novolac type epoxy resin, a triphenylmethane type epoxy resin, a cresol novolac type epoxy resin, a bisphenol A type epoxy resin, a modified bisphenol A type epoxy resin, a bisphenol F type epoxy resin, a modified bisphenol F type epoxy resin, a bisphenol AD type epoxy resin, a modified bisphenol AD type epoxy resin, a dicyclopentadiene type epoxy resin, and a biphenyl type epoxy resin. The phenol novolac type epoxy resin is preferable as the epoxy resin. The phenol novolac type epoxy resin has an epoxy equivalent of preferably 150 g/eq or more, more preferably 160 g/eq or more, further preferably 170 g/eq or more. The epoxy equivalent of the phenol novolac type epoxy resin is preferably 200 g/eq or less, more preferably 190 g/eq or less, further preferably 180 g/eq or less. The epoxy equivalent can be determined in accordance with JIS K7236.

When the adhesive layer 12 includes the epoxy resin, it is preferable that the adhesive layer 12 further include a curing agent for the epoxy resin. Examples of the curing agent include a phenol-based curing agent, an amine-based curing agent, and an acid anhydride-based curing agent, with the phenol-based curing agent being preferred. The phenol-based curing agent, the amine-based curing agent, and the acid anhydride-based curing agent can be individually used, or two or more of them can be used in combination.

Examples of the phenol-based curing agent include a phenol novolac resin, an aralkyl-type phenol resin, a dicyclopentadiene-modified phenol resin, a naphthalene-type phenol resin, a bisphenol-type phenol resin, and a triphenylmethane-type phenol resin. Examples of the amine-based curing agent include diaminodiphenylsulfone, dicyandiamide, diaminophenylmethane, and triethylenetetramine. Examples of the acid anhydride-based curing agent include phthalic anhydride, trimellitic anhydride, and maleic anhydride.

When the adhesive layer 12 includes the epoxy resin, the adhesive layer 12 can include the above acrylic polymer in addition to the epoxy resin. It is preferable that the adhesive layer 12 include the phenol novolac type epoxy resin as the epoxy resin, and further include the above polybutyl acrylate (PAB) as the acrylic polymer. In this case, the adhesive layer 12 can include 100 mass parts or more, can include 150 mass parts or more, can include 200 mass parts or more, of the acrylic polymer, based on 100 mass parts of the epoxy resin (i.e., when the amount of the epoxy resin is 100 mass parts). The adhesive layer 12 can include 300 mass parts or less, can include 250 mass parts or less, of the acrylic polymer, based on 100 mass parts of the epoxy resin (i.e., when the amount of the epoxy resin is 100 mass parts).

When the adhesives layer 12 of the insulating sheet 10 according to this embodiment are subjected to thermogravimetric differential thermal analysis (TG-DTA), the temperature at which a mass reduction by 5 mass % is observed is preferably 350 °C or less, more preferably 300 °C or less. This configuration allows an organic matter such as the resin included in the adhesive layer 12 to be thermally decomposed more easily when the insulating sheet 10 is exposed to a high-temperature atmosphere. Thus, the thermal decomposition of the organic matter in the adhesive layer 12 proceeds more easily before the thermal decomposition of the organic matter proceeds on the outer surface of the outer layer 13. When the insulating sheet 10 reaches a high temperature when in use, the heat at the high temperature is consumed for thermally decomposing the organic matter in the adhesive layer 12. Since the heat is consumed for the thermal decomposition, heat decomposition of the organic matter in the outer layer 13 is suppressed on the outer surface of the outer layer 13. Since the thermal decomposition of the organic matter in the outer layer 13 is suppressed, conductive paths formed by free carbon are suppressed from being generated on the outer surface of the outer layer 13. Further, since the organic matter in the adhesive layer 12 becomes thermally decomposed easily, the organic matter after being thermally decomposed does not remain in a state of free carbon, but can be thermally decomposed sufficiently into a gas such as carbon dioxide. Since the reaction that produces a gas is often an endothermic reaction, the endothermic reaction also suppresses the thermal decomposition of the organic matter in the outer layer 13 on the outer surface of the outer layer 13. This suppresses conductive paths from being formed by free carbon on the outer surface of the outer layer 13. As described above, the insulating sheet 10 according to this embodiment can exhibit better tracking resistance even when the outer layer 13 is fully aromatic polyamide paper, since the temperature at which a mass reduction by 5 mass % is observed in the adhesive layer 12 is preferably 350 °C or less. The temperature at which a mass reduction by 5 mass % is observed in the adhesive layer 12 can be determined by the following method. <Measurement of thermal decomposition by thermogravimetric differential thermal analysis (TG-DTA)>

For the adhesive layer 12, the temperature at which a mass reduction by 5 mass % is observed is determined according to the following procedure:
(1) A mixture for an adhesive layer (to be described later) is applied to an entire one surface of an outer layer, followed by being dried at 100 °C for a minute. The application is carried out so that the adhesive layer after being dried has a thickness of 12 µm.
(2) The outer layer and the adhesive layer above are left in an oven at 130 °C for 24 hours to allow a curing reaction in the adhesive layer to proceed. After the curing reaction has proceeded, the outer layer is peeled off from the adhesive layer.
(3) A TG-DTA curve is obtained for the adhesive layer after the curing reaction using a thermogravimetric differential thermal analyzer (model "EXSTAR6000" manufactured by SII NanoTechnology, Inc.). The temperature is raised from ordinary temperature (23 ± 2 °C) at a rate of 10 °C/min in an atmosphere of 100 mL/min of air. Then, the temperature at which a mass reduction by 5 mass % is observed is read.

The adhesive layer 12 can include an additive such as a tackifier, in addition to the abovementioned polymer components. The content of the component other than the above resin components in the adhesive layer 12 is preferably less than 5 mass %, more preferably less than 0.8 mass %.

The adhesive layer 12 can have a weight per unit area of, for example, 10 g/m² or more and 20 g/m² or less.

The adhesive layer 12 can be made of, for example, a commercially available polymer. The adhesive layer 12 can be made of, for example, a polymer composition in which a plurality of types of polymers are crosslinked with each other.

The two outer layers 13 forming the insulating sheet 10 of this embodiment are both made of aromatic polyamide paper. Since the outer layers 13 are made of aromatic polyamide paper, the insulating sheet 10 of this embodiment can have good heat resistance.

As the aromatic polyamide paper, employed can be, for example, fully aromatic polyamide paper made from at least one of short fibers made of fully aromatic polyamide and synthetic pulp made of fully aromatic polyamide; a sheet including mica powder (mica flakes) and at least one of short fibers made from aromatic polyamide and synthetic pulp made from aromatic polyamide; and a sheet obtained by subjecting the paper or sheet to high-temperature and high-pressure calender processing. As the aromatic polyamide paper, fully aromatic polyamide paper is preferable in terms of having better heat resistance. Examples of the fully aromatic polyamide forming the above short fibers or the above synthetic pulp include a condensation polymer of m-phenylenediamine and isophthalic acid, and a condensation polymer of p-phenylenediamine and terephthalic acid.

Each of the outer layers 13 can be subjected to, for example, lamination or surface treatment. The surface treatment can be carried out using a coating agent including, for example, a polyamide resin (e.g., a methoxymethylated polyamide resin in which the amide group is methoxymethylated). As the outer layer 13, for example, a commercially available product (e.g., product name "Nomex" manufactured by DuPont) can be employed.

The insulating sheet 10 of this embodiment has a volume resistivity of, for example, 1 × 10¹³ Ω·cm or more. The volume resistivity of the insulating sheet 10 is preferably 1 × 10¹⁴ Ω·cm or more.

The insulating sheet 10 of this embodiment has relatively high tracking resistance, and has sufficient heat resistance. The adhesive layer 12 including the above acrylic polymer enables the insulating sheet to have better tracking resistance, and to have good oil resistance. The temperature at which a mass reduction by 5 mass % is observed in the adhesive layer 12, as has been described above, is preferably 350 °C or less, more preferably 300 °C or less. This configuration enables the insulating sheet 10 to have better tracking resistance, and to have good oil resistance.

Next, a description will be given on a method for producing the insulating sheet 10 of this embodiment.

In the method for producing the insulating sheet 10 of this embodiment, for example, a mixture including the components to form the adhesive layer 12 and an organic solvent (as needed) is prepared, the mixture is applied to both surfaces of the substrate layer 11, and the organic solvent included in the applied mixture is volatilized (as needed) to prepare two adhesive layers 12. Further, the outer layers 13 are attached to the respective adhesive layers 12 to be thereby capable of producing the insulating sheet 10. As a coating apparatus, for example, a roll coater can be used.

As the organic solvent, used can be, for example, ethyl acetate, methyl ethyl ketone (MEK), or toluene.

When the mixture including the organic solvent is applied to the outer layers 13, a general application method such as a die coating method or a reverse coating method can be employed. The temperature during the application is, for example, room temperature (15 to 25 ° C).

The insulating sheet 10 produced as above is used as, for example, a component of a motor. The insulating sheet 10 can be used, for example, as an insulating sheet for a drive motor of an automobile.

Examples of the automobile include a hybrid electric vehicle (HEV) and an electric vehicle (EV). Examples of the drive motor include an HV motor, a motor generator, an alternator, a 4WD motor, an oil pump motor, an EPS motor, a compressor motor, and an in-wheel motor.

Examples of the drive motor of an automobile include an oil-cooled drive motor. The oil-cooled drive motor is a drive motor cooled by a cooling oil such as ATF.

For example, the insulating sheet 10 can be used in a heated state. The insulating sheet 10 may be oxidized and degraded if used in a heated state for a long period of time. For example, the insulating sheet 10 can be used in a state of being immersed in oil. Examples of the oil include an automatic transmission oil (ATF). If the insulating sheet 10 is used in the state of being immersed in oil, moisture in the oil such as the ATF may cause a hydrolysis reaction. In contrast, the insulating sheet of this embodiment can have good tracking resistance and also good heat resistance. Thus, the oxidation and degradation can be suppressed. In some cases, the insulating sheet of this embodiment can also have good oil resistance and can suppress the hydrolysis reaction.

Next, a description will be given on an embodiment of the motor of the present invention with reference to the drawings.

The motor of this embodiment includes the insulating sheet 10 described above. The insulating sheet 10 is, for example, a motor insulating sheet.

For example, the motor is a drive motor mounted on a hybrid electric vehicle, an electric vehicle, or the like. Such a drive motor is, for example, an oil-cooled drive motor.

The oil-cooled drive motor for an automobile includes a rotor with a permanent magnet, and a stator 20 configured to generate force to rotate the rotor. As shown in Fig. 2, the stator 20 includes a coil 21 and a stator core 22. The stator 20 is configured to rotate the rotor by creating a magnetic field around the coil 21.

In the oil-cooled drive motor as above, the coil 21 is formed of, for example, a plurality of segment conductors connected to each other. In the oil-cooled drive motor as above, a core such as the stator core 22 or a rotor core has a plurality of slot grooves, and the coil 21 is housed in the plurality of slot grooves. In the oil-cooled drive motor as above, the motor insulating sheet is used to ensure insulation between the coil 21 and an inner wall surface of each of the slot grooves. The motor insulating sheet and the coil 21 are housed in the corresponding slot groove. Specifically, the motor insulating sheet is housed in the slot groove in a state of being wrapped around the coil 21. The coil 21 with the motor insulating sheet wrapped therearound is fixed within the slot groove via an insulating resin (e.g., epoxy varnish) impregnated in the slot groove.

The insulating sheet and motor of this embodiment have been as exemplified above, but the present invention is not limited to the insulating sheet or motor exemplified above. That is, various configurations used in a general insulating sheet or motor can be employed without impairing the effect of the present invention.

The matters disclosed herein include the following:
(1) An insulating sheet including: two outer layers disposed to be opposed to each other; two adhesive layers disposed to be opposed to each other between the two outer layers; and a substrate layer disposed between the two adhesive layers, in which each of the two outer layers is aromatic polyamide paper, the substrate layer is a polyethylene terephthalate resin film, and the polyethylene terephthalate resin film includes an oligomer component in a content of less than 0.8 mass %. The insulating sheet configured as above has relatively high tracking resistance and has sufficient heat resistance.
(2) The insulating sheet according to (1) above, in which, when each of the two adhesive layers is subjected to thermogravimetric differential thermal analysis (TG-DTA), a temperature at which a mass reduction by 5 mass % is observed is 350 °C or less.
(3) The insulating sheet according to (1) or (2) above, in which a ratio of a total thickness of the two adhesive layers to a total thickness of the insulating sheet is 0.10 or more and 0.40 or less.
(4) The insulating sheet according to any of (1) to (3) above, in which a ratio of a thickness of one of the two adhesive layers to a thickness of one of the outer layers on one surface side of the substrate layer is 0.20 or more and 1.00 or less.
(5) The insulating sheet according to any of (1) to (4) above, in which both of the two adhesive layers include an acrylic polymer.
(6) The insulating sheet according to (5) above, in which the acrylic polymer is an acrylic polymer formed by polymerizing at least an alkyl (meth)acrylate.
(7) The insulating sheet according to (6) above, in which the acrylic polymer is a crosslinked reaction product of butyl (meth)acrylate, a terpene phenol, and a polyisocyanate.
(8) A motor including the insulating sheet according to any of (1) to (7) above.

### EXAMPLES

Next, a description on the present invention will be given in more detail by way of experimental examples, but the present invention is not limited thereto.

Materials or raw materials of an outer layer, an adhesive layer, and a substrate layer for producing an insulating sheet are shown below.

### <Material of outer layer>

### - Fully aromatic polyamide paper (PA paper)

Product name "Nomex Series" (manufactured by DuPont Teijin Advanced Papers)

An item with a desired thickness is selected for use each time

### <Materials of adhesive layer>

### - Acrylic polymer (Ac)

A mixed solution was prepared by mixing polybutyl acrylate (PAB), a terpene phenol, a polyisocyanate, and an organic solvent (methyl ethyl ketone (MEK)). When forming the adhesive layer from such a mixed solution, the organic solvent was volatilized, followed further by a heat curing treatment at a temperature of 130 °C for 24 hours.

### - Polyurethane (Pu)

An urethanization reaction product of a polyol component and an isocyanate component was mixed with organic solvents (toluene and methyl ethyl ketone) so that the solid content concentration was 25 mass %, thereby obtaining a mixed solution. When forming an adhesive layer from such a mixed solution, the organic solvents were volatilized, followed further by a curing treatment at 130 °C for 24 hours.

### - Epoxy resin-containing polymer compound (Ep)

A mixed solution was used in which a phenol novolac type epoxy resin and a phenol-based curing agent were added to a solution including polybutyl acrylate (PAB) and an organic solvent (MEK). The mixed solution included 140 mass parts of polybutyl acrylate based on 100 mass parts of the organic solvent, and included 60 mass parts of the phenol novolac type epoxy resin based on 100 mass parts of the organic solvent. The mixed solution included 45 mass parts of the phenol-based curing agent and 3 mass parts of a curing accelerator based on 100 mass parts of the phenol novolac type epoxy resin. When forming an adhesive layer from the above mixed solution, the organic solvent was volatilized, followed further by a curing treatment at 130 °C for 24 hours.

### <Materials of substrate layer>

### - Low oligomer content polyethylene terephthalate resin film (L-PET)

Oligomer content: Less than 0.8 mass %
Product name: "MELINEX 238" (manufactured by DuPont)

### - Polyethylene naphthalate resin film (PEN)

Product name: "Teonex Q5100" (manufactured by TOYOBO Co., Ltd.)

### - Normal polyethylene terephthalate resin film (N-PET)

Oligomer content: 0.8 mass % or more
Product name: "Lumirror Series" (manufactured by TORAY INDUSTRIES, INC.)

### (Examples 1 to 8, Comparative Example 1, Reference Examples 1 to 3)

Table 1 and Table 2 respectively show the configurations (such as the thickness and material of each layer) of the insulating sheets of Examples, Comparative Examples, and the like. Unless otherwise specified, the insulating sheet of any of Examples and

Comparative Examples has a five-layer laminated structure as shown in Fig. 1. Each of Reference Examples 1 to 3 has a single layered structure of a resin film.

### <Production of insulating sheet>

A mixture including the components to form the above adhesive layer and the organic solvent was prepared. This mixture was applied to both surfaces of the substrate layer using a roll coater so that each of the adhesive layers after being dried had a specific thickness. The organic solvent in the applied mixture was volatilized (dried) to form the adhesive layers on the both surfaces of the substrate layer. Further, the outer layers were attached to the respective adhesive layers to form the insulating sheet.

### <Measurement of thermal decomposition by thermogravimetric differential thermal analysis (TG-DTA)>

The adhesive layer of each of Examples was evaluated for thermal decomposition by thermogravimetric differential thermal analysis (TG-DTA). Specifically, the adhesive layer was evaluated according to the following procedure.
(1) The mixture for the adhesive layer of each of Examples was applied entirely to one surface of the outer layer, and then dried at 100 °C for a minute. The application was carried out so that the adhesive layer after being dried had a thickness of 12 µm.
(2) The outer layer and the adhesive layer above were left in an oven at 130 °C for 24 hours to allow a curing reaction of the adhesive layer to proceed. After the curing reaction was allowed to proceed, the outer layer was peeled off from the adhesive layer.
(3) A TG-DTA curve was obtained for the adhesive layer after the curing reaction, using a thermogravimetric differential thermal analyzer (model "EXSTAR6000" manufactured by SII NanoTechnology, Inc.) The temperature was raised from ordinary temperature (23 ± 2 °C) at a rate of 10 °C/min in an atmosphere of 100 mL/min of air. Then, the temperature at which a mass reduction by 5 mass % was observed was read. The results are shown in Table 1 and Table 2 below.

**Table 1**

| | Ex. 1 | Ex. 2 | Ex. 3 | Ex. 4 | Ex. 5 | Ex. 6 | Ex. 7 | Ex. 8 |
|---|---|---|---|---|---|---|---|---|
| Outer layer (thickness of each layer: Ta) | | | | | | | | |
| Material | PA paper | PA paper | PA paper | PA paper | PA paper | PA paper | PA paper | PA paper |
| Thickness of each layer [µm] | 50 | 40 | 50 | 80 | 50 | 50 | 50 | 50 |

| Substrate layer (thickness of each layer: Tb) | | | | | | | | |
|---|---|---|---|---|---|---|---|---|
| Material | L-PET | L-PET | L-PET | L-PET | L-PET | L-PET | L-PET | L-PET |
| Thickness of each layer [µm] | 75 | 125 | 125 | 75 | 75 | 75 | 75 | 75 |

| Adhesive layer (thickness of each layer: Tc) | | | | | | | | |
|---|---|---|---|---|---|---|---|---|
| Material | Ac | Ac | Ac | Ac | Ac | Ac | Pu | Ep |
| Thickness of each layer [µm] | 30 | 30 | 30 | 30 | 10 | 20 | 10 | 10 |

| Insulating sheet (total thickness: Td) | | | | | | | | |
|---|---|---|---|---|---|---|---|---|
| Total thickness [µm] | 235 | 265 | 285 | 295 | 195 | 215 | 195 | 195 |

| Thickness ratio | | | | | | | | |
|---|---|---|---|---|---|---|---|---|
| Ta*2 / Td | 0.43 | 0.30 | 0.35 | 0.54 | 0.51 | 0.47 | 0.51 | 0.51 |
| Tb / Td | 0.32 | 0.47 | 0.44 | 0.25 | 0.38 | 0.35 | 0.38 | 0.38 |
| Tc*2 / Td | 0.26 | 0.23 | 0.21 | 0.20 | 0.10 | 0.19 | 0.10 | 0.10 |
| (Ta+Tc) / Td | 0.34 | 0.26 | 0.28 | 0.37 | 0.31 | 0.33 | 0.31 | 0.31 |
| Tc / Ta | 0.60 | 0.75 | 0.60 | 0.38 | 0.20 | 0.40 | 0.20 | 0.20 |
| (Ta+Tc)/ Tb | 1.07 | 0.56 | 0.64 | 1.47 | 0.80 | 0.93 | 0.80 | 0.80 |
| (Ta*2+Tb)/Td | 0.74 | 0.77 | 0.79 | 0..80 | 0.90 | 0.81 | 0.90 | 0.90 |
| TG-DTA °C at mass reduction by 5 mass % | 296 | 296 | 296 | 296 | 296 | 296 | 315 | 357 |

| Performance evaluation | | | | | | | | |
|---|---|---|---|---|---|---|---|---|
| CTI [V] | 600 | 600 | 575 | 400 | 475 | 525 | 475 | 375 |
| Heat resistance | Good (○) | Good (○) | Good (○) | Good (○) | Good (○) | Good (○) | Good (○) | Good (○) |
| Oil resistance | Good (○) | Good (○) | Good (○) | Good (○) | Good (○) | Good (○) | Bad (×) | Good (○) |

**Table 2**

| | C. Ex 1 | R. Ex. 1 | R. Ex. 2 | R. Ex. 3 |
|---|---|---|---|---|
| Outer layer (thickness of each layer: Ta) | | | | |
| Material | PA paper | - | - | - |
| Thickness of each layer [µm] | 50 | - | - | - |

| Substrate layer (thickness of each layer: Tb) | | | | |
|---|---|---|---|---|
| Material | N-PET | PA paper Single layer only | PEN Single layer only | N-PET Single layer only |
| Thickness of each laver [µm] | 75 | - | - | - |

| Adhesive layer (thickness of each layer: Tc) | | | | |
|---|---|---|---|---|
| Material | Ac | - | - | - |
| Thickness of each layer [µm] | 30 | - | - | - |

| Insulating sheet (total thickness: Td) | | | | |
|---|---|---|---|---|
| Total thickness [µm] | 235 | 250 | 250 | 250 |

| Thickness ratio | | | | |
|---|---|---|---|---|
| Ta*2 / Td | 0.43 | - | - | - |
| Tb / Td | 0.32 | - | - | - |
| Tc*2 / Td | 0.26 | - | - | - |
| (Ta+Tc) / Td | 0.34 | - | - | - |
| Tc / Ta | 0.60 | - | - | - |
| (Ta+Tc)/ Tb | 1.07 | - | - | - |
| (Ta*2+Tb)/Td | 0.74 | - | - | - |
| TG-DTA °C at mass reduction by 5 mass % | 296 | - | - | - |

| Performance evaluation | | | | |
|---|---|---|---|---|
| CTI [V] | 600 | 225 | 175 | 400 |
| Heat resistance | Bad (×) | - | - | - |
| Oil resistance | Bad (×) | - | - | - |

The insulating sheet produced in each of Examples and Comparative Examples was evaluated for tracking resistance, heat resistance, and oil resistance, as shown below.

### <Evaluation test for tracking resistance>

The test was carried out in accordance with an International Electrotechnical Commission standard, specifically IEC 60112.

Specifically, 20 test samples each having a flat plate shape with a size of 100 mm × 100 mm and a thickness of 3 mm or more were prepared. Platinum electrodes were placed on a surface of the test sample, a voltage was applied between the electrodes, and an electrolyte (aqueous 0.1 mass % ammonium chloride solution) was dropped at regular intervals between the electrodes with the voltage kept applied therebetween. The test was continued until tracking occurred or until the number of drops reached 100. Then, the number of drops of the electrolyte required to cause the tracking to occur was counted. Five tests were performed for each voltage, the applied voltage was determined to be acceptable if the number of drops counted was 50 or more for all the tests. This operation was repeatedly performed at various voltages in increments of 25 V to determine a CTI (comparative tracking index).

### <Evaluation test for heat resistance>

A test specimen of the insulating sheet cut into a square of 150 mm × 150 mm was heated in a dryer at 240 °C for 1000 hours.

Thereafter, the test specimen was cooled to ordinary temperature, and breakdown voltage (BDV) of the test specimen was measured at ordinary temperature while increasing the voltage (1000 V/sec). The measurement was performed for up to 1000 hours. The insulating sheet was evaluated as bad (×) when the BDV was less than 50% of the initial BDV at the 500th hour, and evaluated as good (∘) when the BDV was 50% or more. The results are shown in Table 1 and Table 2.

### <Evaluation test for oil resistance (hydrolysis resistance)>

A test sample was prepared by forming into a loop shape the test specimen of the insulating sheet cut into a square of 150 mm × 150 mm. A pressure cooker test (PCT) was performed for the test sample under the condition of 120 °C, 100% relative humidity, and 0.2 MPa atmospheric pressure. Thereafter, the test specimen was cooled to ordinary temperature, and breakdown voltage (BDV) of the test specimen was measured at ordinary temperature while increasing the voltage (1000 V/sec). The measurement was performed for up to 150 hours. The insulating sheet was evaluated as bad (×) when the BDV was less than 80% of the initial BDV at the 100th hour, and evaluated as good (∘) when the BDV was 80% or more. The results are shown in Table 1 and Table 2.

The results of the above evaluation tests are shown in Table 1 and Table 2. As can be seen from Table 1 and Table 2, the insulating sheet of each of Examples had higher tracking resistance and higher heat resistance than those of the insulating sheet of each of Comparative Examples. Some insulating sheets (in which the adhesive layer includes an acrylic polymer) among Examples also had good oil resistance. Further, when the adhesive layer of each of Examples was subjected to thermogravimetric differential thermal analysis (TG-DTA), the adhesive layer had higher tracking resistance when the temperature at which a mass reduction by 5 mass % was observed was 350 °C or less, and further 300 °C or less.

### Industrial Applicability

The insulating sheet of the present invention is suitably used, for example, as a component of a motor. The insulating sheet of the present invention is equipped with, for example, a motor, and is suitably used even in a state of being immersed in automatic transmission oil (ATF).

### REFERENCE SIGNS LIST

11: Substrate layer
12: Adhesive layer
13: Outer layer
10: Insulating sheet

## Claims

1. An insulating sheet comprising: two outer layers disposed to be opposed to each other; two adhesive layers disposed to be opposed to each other between the two outer layers; and a substrate layer disposed between the two adhesive layers, wherein
each of the two outer layers is aromatic polyamide paper,
the substrate layer is a polyethylene terephthalate resin film, and
the polyethylene terephthalate resin film comprises an oligomer component in a content of less than 0.8 mass %.

2. The insulating sheet according to claim 1, wherein, when each of the two adhesive layers is subjected to thermogravimetric differential thermal analysis, a temperature at which a mass reduction by 5 mass % is observed is 350 °C or less.

3. The insulating sheet according to claim 1 or 2, wherein both of the two adhesive layers comprise an acrylic polymer.

4. A motor comprising the insulating sheet according to claim 1 or 2.
